# FASCICULE DE BREVET EUROPEEN

(11) **EP 1 382 504 B1**
(45) Date de publication et mention de la délivrance du brevet: **26.01.2011**
(21) Numéro de dépôt: 03291554.8
(22) Date de dépôt: 24.06.2003
(51) Int. Cl.: B60T 17/04, B60T 11/18, B60T 11/04

(54) **Dispositif de protection d'un plateau de frein d'un véhicule contre les entrées d'eau**
Vorrichtung zur Verhinderung von Wassereintritt in eine Bremsplatte
Device for protecting a brake plate against water entry

(30) Priorité: 15.07.2002 FR 0208921
(43) Date de publication de la demande: 21.01.2004
(73) Titulaire: Peugeot Citroën Automobiles SA, 78943 Vélizy-Villacoublay Cedex (FR)
(72) Inventeur: Reignard, Jean, 75017 Paris (FR)

(56) Documents cités:
- WO-A-96/20856
- DE-A- 19 912 352
- DE-C- 3 940 817
- DE-C- 19 918 233

## Description

L'invention est relative à un dispositif de protection d'un plateau de frein d'un véhicule contre les entrées d'eau.

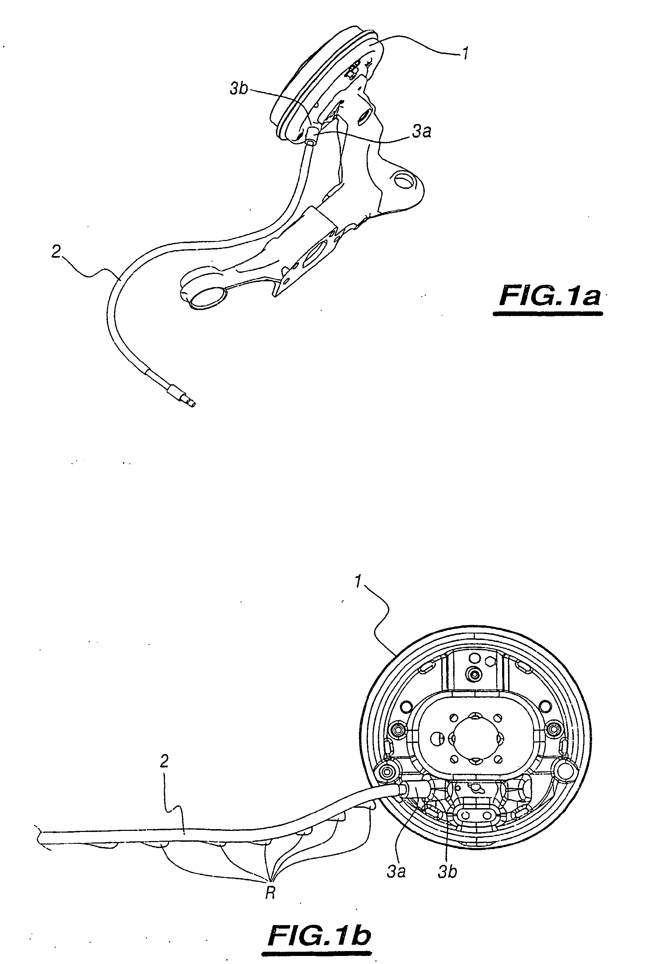

Les véhicules automobiles actuels sont équipés d'organes de freinage, nécessaires à la sécurité des utilisateurs de ces véhicules et des tiers, ces organes de freinage comprenant habituellement, ainsi que représenté en figures 1a et 1b, un plateau de frein associé à une roue du véhicule, ce plateau de frein comprenant des composants internes de freinage tels que garnitures de freinage destinées à entrer en frottement par contact avec un tambour, lors de l'application d'une commande de freinage. La commande de freinage est, de manière habituelle, exercée par commande hydraulique, notamment par l'intermédiaire d'un câble de frein secondaire, lequel est connecté d'une part aux circuits de commande de freinage non représentés au dessin, en général, au niveau du bloc moteur et de l'habitacle du véhicule et, d'autre part, au plateau de frein, par l'intermédiaire d'une pièce d'appui de gaine du câble de frein secondaire, connectée à une pièce d'appui de gaine de plateau.

L'étanchéité de l'ensemble formé par l'extrémité du câble de frein secondaire, équipée de cette pièce d'appui de gaine, la gaine elle-même, et la pièce d'appui de gaine de plateau au niveau de la connexion de ces derniers n'étant pas parfaite, cette étanchéité pouvant, en outre, être facilement dégradée par les vibrations de toute nature imprimées aux roues du véhicule en cours d'utilisation, au plateau de frein et finalement à la connexion précitée, on a constaté l'existence d'entrées d'eau dans les plateaux de freins, via la pièce d'appui gaine de plateau notamment.

Un tel phénomène d'entrées d'eau est dû successivement à la projection d'eau de chaussées humides par temps de pluie par les roues du véhicule, à l'absence de protection du câble de frein secondaire et du plateau de frein contre ces projections et, bien entendu, à l'absence ou à la dégradation de l'étanchéité de la connexion précitée au niveau des pièces d'appui.

Des investigations supplémentaires ont, en outre, montré que le phénomène d'entrées d'eau prépondérant est dû au ruissellement de l'eau de projection collectée par le câble de frein secondaire lui-même. En effet, le câble de frein secondaire présente une certaine longueur, non protégée vis-à-vis des projections d'eau, et constitue en fait un chemin d'écoulement par gravité privilégié de l'eau projetée ainsi collectée vers les zones d'étanchéité imparfaite ou dégradée de la connexion, en raison de la position basse relative des roues du véhicule, du plateau de frein et de la connexion vis-à-vis des parties supérieures du câble de frein secondaire reliées aux circuits de commande de freinage du véhicule.

Un tel phénomène d'entrées d'eau est néfaste à un bon fonctionnement du plateau de frein et des organes de freinage incorporés dans ce dernier.

En particulier, ce phénomène est susceptible d'entraîner les dégradations et dysfonctionnements ci-après :
- collage dû à la corrosion : les garnitures de frein restent collées au tambour en présence d'eau, notamment en roulage hivernal ;
- corrosion à terme des composants des organes de freinage du plateau de frein ;
- décollement des garnitures par migration de la corrosion entre le segment et la garniture ;
- fixation et solidarisation intempestives des garnitures de frein sur le tambour par le gel, en cas de stationnement prolongé du véhicule par grand froid.

L'invention a pour objet de remédier aux inconvénients précités des plateaux de freins de l'art antérieur et de réduire ou même supprimer les dégradations et dysfonctionnements précités, inhérents au phénomène d'entrées d'eau.

Le dispositif de protection d'un plateau de frein d'un véhicule automobile contre les entrées d'eau via la pièce d'appui gaine de plateau du câble de frein secondaire connecté à ce plateau de frein, objet de la présente invention, est remarquable en ce qu'il comprend des moyens d'inhibition du ruissellement de l'eau sur la gaine de câble de frein secondaire.

Il trouve application à l'équipement de véhicules automobiles, véhicules personnels, utilitaires ou autres, véhicules neufs et/ou pièces détachées de remplacement.

Il sera mieux compris à la lecture de la description et à l'observation des dessins ci-après, dans lesquels, outre les figures 1a et 1b, relatives à une connexion entre un plateau de frein et un câble de frein secondaire de l'art antérieur, non équipée d'un dispositif conforme à l'objet de la présente invention,
- la figure 2 représente, à titre illustratif, un dispositif de protection d'un plateau de frein d'un véhicule automobile contre les entrées d'eau, conforme à l'objet de la présente invention ;
- la figure 3 représente une vue isométrique d'une connexion entre un plateau de frein et un câble de frein secondaire équipée d'un dispositif de protection d'un plateau de frein d'un véhicule automobile contre les entrées d'eau, conforme à l'objet de la présente invention ;
- les figures 4a et 4b représentent, à titre illustratif, une pièce rapportée en forme de manchon permettant la mise en oeuvre d'un dispositif conforme à l'objet de l'invention, non installé, figure 4a, respectivement installé sur la gaine du câble de frein secondaire, figure 4b ;
- la figure 5 représente, à titre illustratif, une vue isométrique d'un câble de frein secondaire équipé d'un dispositif conforme à l'objet de la présente invention, l'ensemble constitué par le câble de frein secondaire et le dispositif objet de l'invention constituant, à titre d'exemple non limitatif, un composant de pièces détachées destiné à être monté sur un plateau de frein.

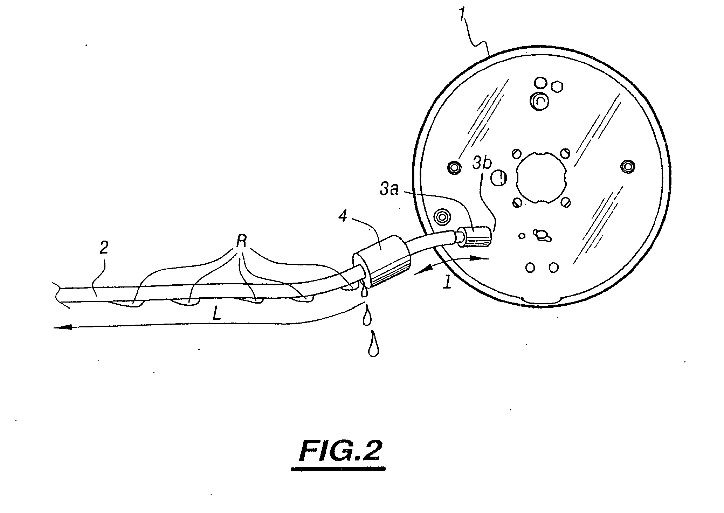

Une description plus détaillée d'un dispositif de protection d'un plateau de frein d'un véhicule automobile contre les entrées d'eau, conforme à l'objet de la présente invention, sera maintenant donnée en liaison avec les figures 2 et suivantes.

En référence à la figure 2, on rappelle que le câble de frein secondaire 2 est connecté au plateau de frein 1 par l'intermédiaire d'une pièce 3a d'appui de gaine de câble de frein secondaire et d'une pièce 3b d'appui de gaine de plateau, solidaires du plateau de frein 1.

Ainsi que représenté de manière illustrative sur la figure 2, le dispositif de protection objet de l'invention est remarquable en ce qu'il comprend un élément 4 d'inhibition du ruissellement R de l'eau sur la gaine du câble de frein secondaire 2.

Grâce à la mise en place de l'élément d'inhibition du ruissellement R, on comprend, en particulier, que l'écoulement privilégié le long de la gaine du câble de frein secondaire 2 est sensiblement supprimé ou fortement atténué, l'eau de ruissellement n'atteignant plus ainsi la zone d'étanchéité imparfaite existant entre les pièces d'appui précédemment mentionnées.

D'une manière générale, ainsi que représenté sur la figure 2 notamment, l'élément 4 d'inhibition du ruissellement R de l'eau est avantageusement formé par une pièce rapportée formant un déflecteur à eau.

Ainsi que représenté en outre sur la figure 2 et de manière particulièrement avantageuse, la pièce rapportée formant le déflecteur à eau est placée au voisinage de l'extrémité du câble de frein secondaire 2 équipée de la pièce d'appui gaine 3a.

Sur la figure 2, on a représenté par I la distance séparant la pièce rapportée formant l'élément 4 d'inhibition du ruissellement R et par L la longueur de câble de frein secondaire soumise aux projections d'eau et jouant donc le rôle de collecteur d'eau de ruissellement.

De préférence, et ainsi qu'il apparaît à l'observation de la figure 2, le rapport l/L est choisi égal inférieur à 1/10 par exemple, étant entendu que la distance ou longueur de câble I est maintenue suffisante pour maintenir un fonctionnement mécanique correct de l'ensemble, cette longueur de câble I étant toutefois suffisamment faible pour que la longueur de câble correspondante n'assure qu'une collecte très réduite de l'eau projetée par les roues du véhicule, et n'entraîne en pratique aucun phénomène de ruissellement important. La position du déflecteur, pièce rapportée, dépend aussi de l'environnement, suspension, guide-câble secondaire, mais doit rester le plus proche possible du plateau de frein.

Dans ces conditions, on indique que la pièce rapportée permet d'empêcher l'atteinte de la pièce d'appui 3a et finalement de la pièce d'appui 3b par l'eau de ruissellement R.

De préférence, dans un premier mode de réalisation non limitatif, la pièce rapportée 4 peut avantageusement être formée par un manchon entourant la gaine du câble de frein secondaire 2.

Dans ces conditions, le manchon entourant la gaine peut être engagé à force sur le câble de frein et, en particulier, sur la gaine de ce dernier et amené par glissement en position adéquate.

Dans un premier mode de réalisation non limitatif, on indique que le manchon précité est avantageusement constitué en un matériau du type mousse en PVC (PolyChlorure de Vinyl) à cellules fermées.

Dans un deuxième mode de réalisation, le manchon 4 est constitué en un matériau élastomère EPDM par exemple.

Bien entendu, la pièce rapportée 4 peut être réalisée sous d'autres formes de réalisation distinctes de celles du manchon précédemment décrit. En particulier, on indique que la pièce rapportée 4 peut être formée par une rondelle plastique conique.

De même, la pièce rapportée 4 précitée peut être formée par un anneau du type joint torique.

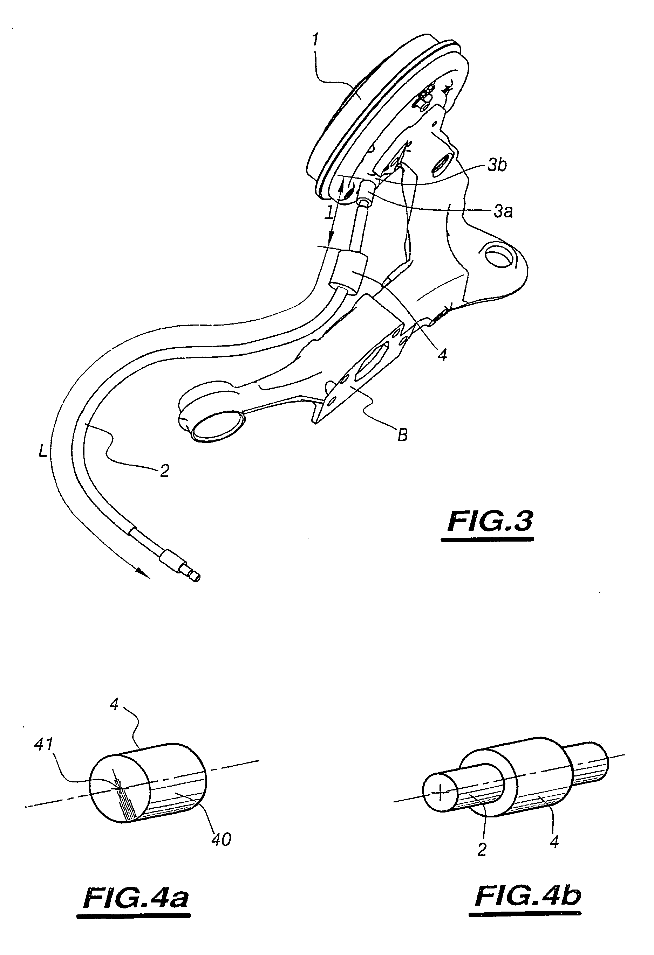

Sur la figure 3, on a représenté une vue isométrique de l'ensemble constitué par le plateau de frein 1, le câble de frein secondaire 2 équipé de la pièce rapportée 4, l'ensemble constitué par le câble de frein secondaire 2 et la pièce rapportée 4 étant monté par l'intermédiaire des pièces d'appui 3a et 3b précédemment mentionnées dans la description.

L'ensemble est, bien entendu, maintenu par un bras B au châssis du véhicule de manière classique.

Un mode de réalisation particulièrement adapté d'une pièce rapportée 4 sous forme de manchon sera maintenant décrit en liaison avec les figures 4a et 4b pour un manchon non installé, figure 4a, respectivement un manchon installé sur le câble de frein secondaire 2, figure 4b.

Ainsi que représenté sur les figures précitées, le manchon constitutif d'une pièce rapportée conforme à l'objet de la présente invention peut comprendre un corps de manchon 40 en matériau extensible, les matériaux convenables correspondant, par exemple, aux matériaux de type mousse PVC à cellules fermées ou matériaux élastomères EPDM précédemment cités.

De préférence, ainsi que représenté sur la figure 4a, le corps de manchon présente sensiblement la forme d'un cylindre de révolution.

Le cylindre de révolution peut présenter avantageusement un diamètre compris entre 3 et 5 cm par exemple.

En outre, le corps de manchon présente une ouverture traversante en croix ou une ouverture traversante cylindrique, placée sensiblement au centre d'une section droite du cylindre de révolution. L'ouverture traversante porte la référence 41 sur la figure 4a. L'ouverture traversante précitée permet d'engager et de maintenir le corps de manchon et le manchon sur la gaine d'un câble de frein secondaire 2 au voisinage de l'extrémité de ce câble de frein secondaire équipé de la pièce 3a d'appui gaine du câble de frein secondaire 2.

Le manchon de protection décrit comme composant en relation avec la figure 4a peut alors être monté, ainsi que représenté en figure 4b, sur le câble de frein secondaire 2.

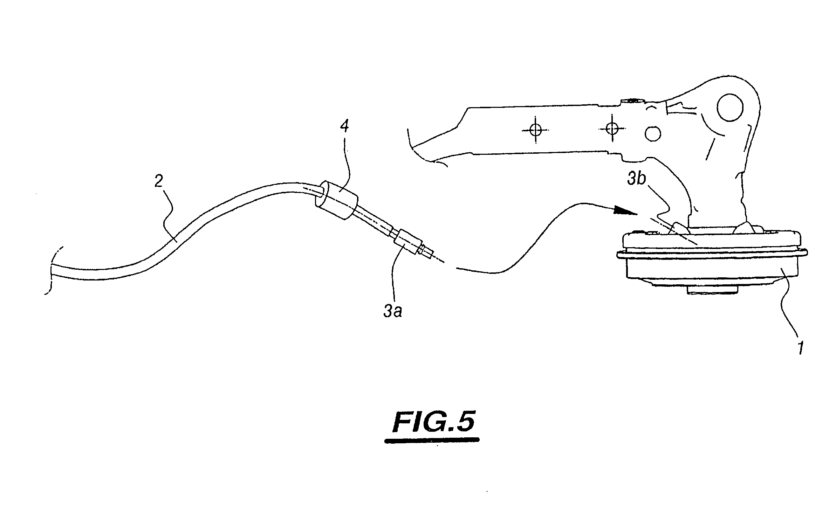

Après montage de la pièce rapportée 4 sur le câble de frein secondaire 2, on obtient, ainsi que représenté en figure 5, un câble de frein secondaire pour plateau de frein d'un véhicule automobile conforme à l'objet de la présente invention, ce câble de frein secondaire étant remarquable en ce qu'il comprend une pièce rapportée 4 sur la gaine de ce dernier, cette pièce rapportée étant placée, bien entendu, au voisinage de la pièce 3a d'appui gaine du câble de frein secondaire 2.

Ainsi que représenté en figure 5, on indique que le câble de frein secondaire pour plateau de frein d'un véhicule automobile conforme à l'objet de la présente invention peut alors être monté sur tout véhicule automobile neuf en cours de construction ou, bien entendu, à titre de pièce de rechange pour un véhicule automobile déjà en service.

On a ainsi décrit un dispositif de protection d'un plateau de frein d'un véhicule automobile contre les entrées d'eau via la pièce d'appui gaine du câble de frein secondaire connecté à ce plateau de frein par une pièce d'appui de gaine de plateau particulièrement avantageux en raison de sa simplicité. En particulier, en référence à la figure 2, on indique que la rupture de continuité du chemin ou trajet d'écoulement de l'eau de ruissellement provoquée par la présence de la pièce rapportée, en particulier, lorsque cette pièce rapportée présente une face sensiblement orthogonale à la surface latérale de la gaine du câble de frein secondaire 2, permet d'annuler sensiblement la vitesse linéaire de l'écoulement par ruissellement, ce qui permet d'évacuer cette eau de ruissellement sous forme d'écoulement dévié et d'empêcher ainsi l'atteinte de la zone de connexion à étanchéité imparfaite par l'eau de ruissellement précitée.

L'ensemble des inconvénients précédemment mentionnés dans la description et des dysfonctionnements issus des dégradations engendrées au niveau des organes de freinage contenus dans le plateau de freinage 1 sont ainsi sensiblement supprimés.

## Revendications

1. Dispositif de protection d'un plateau de frein (1) d'un véhicule automobile contre les entrées d'eau via la pièce d'appui gaine (3a) de plateau du câble de frein secondaire (2) connecté à ce plateau de frein (1), **caractérisé en ce qu'**il comprend des moyens d'inhibition (4) du ruissellement de l'eau sur la gaine dudit câble de frein secondaire.

2. Dispositif selon la revendication 1, **caractérisé en ce que** lesdits moyens d'inhibition (4) du ruissellement de l'eau sont formés par une pièce rapportée formant déflecteur à eau et placée au voisinage de l'extrémité dudit câble de frein secondaire (2) équipée de ladite pièce d'appui gaine, ladite pièce rapportée permettant d'empêcher l'atteinte de ladite pièce d'appui gaine par le ruissellement de l'eau.

3. Dispositif selon la revendication 2, **caractérisé en ce que** ladite pièce (4) rapportée est formée par un manchon entourant la gaine dudit câble de frein secondaire.

4. Dispositif selon la revendication 3, **caractérisé en ce que** ledit manchon est constitué en un matériau du type mousse en PVC à cellules fermées.

5. Dispositif selon la revendication 3, **caractérisé en ce que** ledit manchon est constitué en un matériau élastomère EPDM.

6. Dispositif selon la revendication 2, **caractérisé en ce que** ladite pièce rapportée est formée par une rondelle plastique conique.

7. Dispositif selon la revendication 2, **caractérisé en ce que** ladite pièce rapportée est formée par un anneau du type joint torique.

8. Manchon de protection contre le ruissellement de l'eau sur la gaine d'un câble de frein secondaire (2) d'un plateau de frein (1) d'un véhicule automobile, **caractérisé en ce que** ledit manchon (4) comprend :
- un corps de manchon (40) en matériau extensible, ledit corps de manchon présentant sensiblement la forme d'un cylindre de révolution ; et
- une ouverture traversante (41) en croix ou cylindrique placée sensiblement au centre dudit cylindre de révolution, ce qui permet d'engager et de maintenir ledit manchon sur la gaine d'un câble de frein secondaire (2) au voisinage de l'extrémité de ce câble de frein secondaire équipée de la pièce d'appui gaine (3a) du câble de frein secondaire (2).

9. Câble de frein secondaire (2) pour plateau de frein (1) d'un véhicule automobile, **caractérisé en ce qu'**il comprend une pièce rapportée sur la gaine dudit câble de frein secondaire contre le ruissellement de l'eau sur la gaine du cable, ladite pièce (4) rapportée étant placée au voisinage de la pièce d'appui gaine (3a) dudit câble de frein secondaire.

## Claims

1. Device for protecting a brake plate (1) of a motor vehicle against the entry of water via the plate sheath support piece (3a) of the secondary brake cable (2) connected to this brake plate (1), **characterized in that** it comprises means (4) to inhibit the running of water on the sheath of the said secondary brake cable.

2. Device according to Claim 1, **characterized in that** the said means (4) to inhibit the running of water are formed by an added piece forming a water deflector and placed in the vicinity of the end of the said secondary brake cable (2) equipped with the said sheath support piece, the said added piece allowing the running of water to be prevented from reaching the said sheath support piece.

3. Device according to Claim 2, **characterized in that** the said added piece (4) is formed by a sleeve surrounding the sheath of the said secondary brake cable.

4. Device according to Claim 3, **characterized in that** the said sleeve is constituted by a material of the closed cell PVC foam type.

5. Device according to Claim 3, **characterized in that** the said sleeve is constituted by an EPDM elastomer material.

6. Device according to Claim 2, **characterized in that** the said added piece is formed by a conical plastic washer.

7. Device according to Claim 2, **characterized in that** the said added piece is formed by a ring of the toric joint type.

8. Sleeve for protection against the running of water on the sheath of a secondary brake cable (2) of a brake plate (1) of a motor vehicle, **characterized in that** the said sleeve (4) comprises:
- a sleeve body (40) of extensible material, the said sleeve body having substantially the shape of a cylinder of revolution; and
- a through-opening (41), in the form of a cross or cylindrical, placed substantially in the centre of the said cylinder of revolution, which allows the said sleeve to be engaged and held on the sheath of a secondary brake cable (2) in the vicinity of the end of this secondary brake cable equipped with the sheath support piece (3a) of the secondary brake cable (2).

9. Secondary brake cable (2) for a brake plate (1) of a motor vehicle, **characterized in that** it comprises an added piece on the sheath of the said secondary brake cable against the running of water on the sheath of the cable, the said added piece (4) being placed in the vicinity of the sheath support piece (3a) of the said secondary brake cable.

## Patentansprüche

1. Vorrichtung zum Schutz einer Bremsplatte (1) eines Kraftfahrzeugs vor Wassereindringen über den Plattenmantel-Auflageteil (3a) des Hilfsbremskabels (2), das an diese Bremsplatte (1) angeschlossen ist, **dadurch gekennzeichnet, dass** sie Mittel (4) zum Verhindern des Abfließens des Wassers auf dem Mantel des Hilfsbremskabels aufweist.

2. Vorrichtung nach Anspruch 1, **dadurch gekennzeichnet, dass** die Mittel (4) zum Verhindern des Abfließens des Wassers aus einem angebauten Teil gebildet sind, der einen Wasserablenker bildet und in der Nähe des Endes des Hilfsbremskabels (2), das mit dem Mantelauflageteil ausgerüstet ist, platziert ist, wobei es der angebaute Teil erlaubt, das Erreichen des Mantelauflageteils durch das Abfließen des Wassers zu verhindern.

3. Vorrichtung nach Anspruch 2, **dadurch gekennzeichnet, dass** der angebaute Teil (4) aus einem Stutzen gebildet ist, der den Mantel des Hilfsbremskabels umgibt.

4. Vorrichtung nach Anspruch 3, **dadurch gekennzeichnet, dass** der Stutzen aus einem Werkstoff des Typs Schaumstoff aus PVC mit geschlossenen Zellen besteht.

5. Vorrichtung nach Anspruch 3, **dadurch gekennzeichnet, dass** der Stutzen aus einem EPDM-Elastomermaterial besteht.

6. Vorrichtung nach Anspruch 2, **dadurch gekennzeichnet, dass** der angebaute Teil aus einer kegelförmigen Kunststoffunterlegscheibe gebildet ist.

7. Vorrichtung nach Anspruch 2, **dadurch gekennzeichnet, dass** der angebaute Teil aus einem Ring des Typs O-Ring gebildet ist.

8. Stutzen zum Schutz vor dem Abfließen des Wassers auf dem Mantel eines Hilfsbremskabels (2) einer Bremsplatte (1) eines Kraftfahrzeugs, **dadurch gekennzeichnet, dass** der Stutzen (4) Folgendes aufweist:
- einen Stutzenkörper (40) aus dehnbarem Material, wobei der Stutzenkörper im Wesentlichen die Form eines Rotationszylinders aufweist; und
- eine durchgehende Öffnung (41) in Kreuz- oder zylindrischer Form, die im Wesentlichen in der Mitte des Rotationszylinders platziert ist, was es erlaubt, den Stutzen auf den Mantel eines Hilfsbremskabels (2) in der Nähe des Endes dieses Hilfsbremskabels, das mit dem Mantelauflageteil (3a) des Hilfsbremskabels (2) ausgerüstet ist, einzuführen und zu halten.

9. Hilfsbremskabel (2) für Bremsplatte (1) eines Kraftfahrzeugs, **dadurch gekennzeichnet, dass** es einen Teil aufweist, der auf dem Mantel des Hilfsbremskabels angebaut ist, zum Schutz zum Schutz dem Abfließen des Wassers auf dem Mantel des Kabels, wobei der angebaute Teil (4) in der Nähe des Mantelauflageteils (3a) des Hilfsbremskabels platziert ist.
